# EUROPÄISCHE PATENTSCHRIFT

(11) **EP 3 921 554 B1**
(45) Veröffentlichungstag und Bekanntmachung des Hinweises auf die Patenterteilung: **19.06.2024**
(21) Anmeldenummer: 20704235.9
(22) Anmeldetag: 05.02.2020
(51) Int. Cl.: F16C 17/04, F16C 33/10, F16C 25/02, F16C 29/10, F16C 29/12, F16C 29/02, F16C 33/20

(54) **GLEITELEMENT**
SLIDING ELEMENT
ÉLÉMENT DE GLISSEMENT

(30) Priorität: 05.02.2019 DE 202019100666 U
(43) Veröffentlichungstag der Anmeldung: 15.12.2021
(73) Patentinhaber: Igus GmbH, 51147 Köln (DE)
(72) Erfinder: MOSHAMMER, Horst, 53545 Linz am Rhein (DE)
(74) Vertreter: Lippert Stachow Patentanwälte Rechtsanwälte
(86) Internationale Anmeldenummer: PCT/EP2020/052788
(87) Internationale Veröffentlichungsnummer: WO 2020/161150

(56) Entgegenhaltungen:
- EP-A2- 0 513 697
- WO-A1-2016/029896
- DE-A1- 19 940 969
- DE-A1-102005 022 808
- DE-A1-102014 213 134
- DE-U1-202017 105 698
- US-A1- 2010 126 821

## Beschreibung

Die Erfindung betrifft ein Gleitelement für ein Führungssystem, das zwei relativ zueinander bewegbare Führungsteile aufweist, wobei das Gleitelement mit einer Befestigungsseite an einem der Führungsteile festlegbar ist und an einer der Befestigungsseite gegenüberliegenden Seite eine Gleitfläche zur gleitenden Anlage am anderen Führungsteil aufweist, wobei das Gleitelement ein erstes Teil und ein zweites Teil aufweist, die um eine Drehachse gegeneinander drehbar gelagert sind und eine Kontaktfläche zur gegenseitigen Anlage der beiden Teile aufweisen, wobei die Kontaktfläche in einer Drehrichtung des zweiten Teils gegen das erste Teil um die Drehachse eine axiale Steigung aufweist, so dass durch Drehung der beiden Teile relativ zueinander die axiale Gesamtbauhöhe der beiden an der Kontaktfläche aneinander anliegenden Teile veränderbar ist, und die beiden Teile bei ihrer Relativdrehung um die Drehachse entlang ihrer Kontaktfläche über einen Verstellwinkel in verschiedenen Winkelpositionen aneinander arretierbar sind und die Arretierung lösbar ist, wobei an einer vom zweiten Teil abgewandten Seite des ersten Teils die Befestigungsseite des Gleitelements zur Festlegung an einem der Führungsteile und an einer vom ersten Teil abgewandten Seite des zweiten Teils die Gleitfläche des Gleitelements angeordnet sind, wobei das erste Teil auf einem Teilkreis bezüglich der Drehachse Vertiefungen oder Erhöhungen aufweist, die mit einem Vorsprung bzw. einer Vertiefung an einem am zweiten Teil drehfest angeordneten elastischen Element zur lösbaren Arretierung der beiden Teile in den verschiedenen Winkelpositionen durch einen formschlüssigen Eingriff zusammenwirken, das zweite Teil eine Öffnung aufweist und das elastische Element sich in oder unterhalb der Öffnung erstreckt und an seinem freien Ende den Vorsprung bzw. die Vertiefung aufweist.

Das Gleitelement soll insbesondere zur Führung zweier Profile gegeneinander in Längsrichtung geeignet sein, mit der Möglichkeit, ein toleranzbedingtes Führungsspiel nachträglich durch einfache Einstellung zu korrigieren.

Als Führungssysteme kommen unter anderem Vierkantrohrführungen, Teleskopsysteme, Hubsäulen in beliebigen Größen, Teleskopkräne und Hubwagen mit Teleskopsäulen in Betracht.

Aus der DE 20 2017 105 698 U1 ist eine als Gleitelement für ein Führungssystem der eingangs genannten Art verwendbare Klemmvorrichtung für die klemmende Fixierung von Geländerplatten in einer Geländerplattenaufnahme bekannt. Die Klemmvorrichtung weist ein erstes Klemmteil und ein zweites Klemmteil auf, die um eine Drehachse gegeneinander drehbar gelagert sind und eine Kontaktfläche zur gegenseitigen Anlage der beiden Teile aufweisen, wobei das erste Klemmteil eine oder mehrere erste Keilflächen und das zweite Klemmteil eine oder mehrere zweite Keilflächen aufweisen, wobei die Kontaktfläche in einer Drehrichtung des ersten Klemmteils gegen das zweite Klemmteil um die Drehachse durch Zusammenwirken der Keilflächen der beiden Klemmteile eine axiale Steigung aufweist, so dass durch Drehung der beiden Teile relativ zueinander die axiale Gesamthöhe der beiden an der Kontaktfläche aneinanderliegenden Klemmteile veränderbar ist. Zur Bildung eines Sperreingriffs ist an dem zweiten Klemmteil in einer Keilfläche eine vielstufige Sperrverrastung und an dem ersten Klemmteil im Bereich eines Werkzeugansatzes ein Sperrfortsatz vorgesehen, so dass die beiden Klemmteile bei ihrer Relativdrehung um die Drehachse entlang ihrer Kontaktfläche über einen Verstellwinkel in verschiedenen Winkelpositionen aneinander arretierbar sind. Dazu weist die Sperrverrastung auf einem Teilkreis bezüglich der Drehachse Vertiefungen auf, die mit dem als Vorsprung ausgebildeten Sperrfortsatz zur lösbaren Arretierung der beiden Klemmteile in den verschiedenen Winkelpositionen durch einen formschlüssigen Eingriff zusammenwirken. Der Sperrfortsatz ist an einem am ersten Klemmteil drehfest angeordneten elastischen Materialabschnitt angeordnet. Das erste Klemmteil weist an seiner der Kontaktfläche gegenüberliegenden Seite eine Öffnung auf, unterhalb der sich der Materialabschnitt erstreckt, an dessen freiem Ende der Sperrfortsatz angeordnet ist.

An der dem zweiten Klemmteil zugewandten Seite des ersten Klemmteils ist eine Flachnut ausgebildet, die sich radial einwärts in Richtung auf die Drehachse erstreckt und als Werkzeugansatz für ein Verdrehwerkzeug dient. Die Flachnut bildet radial auswärts im ringförmigen Umfang des ersten Klemmteils eine Einführöffnung für das Verdrehwerkzeug. Bei Einführen des Drehwerkzeugs durch die Öffnung in die Flachnut verdrängt das Verdrehwerkzeug den Materialabschnitt, an dem der Sperrfortsatz angeordnet ist, wodurch der Sperreingriff zwischen dem Sperrfortsatz und der Sperrverrastung lösbar ist.

Aus der EP 0 513 697 A2 ist eine Axialwälzlager-Baueinheit mit mindestens einer Axiallaufscheibe mit durch einen Käfig geführten Wälzelementen und einer mit der Axiallaufscheibe verrastbaren Abstandsscheibe veränderlicher Dicke bekannt. Die Abstandsscheibe besteht aus einem ersten Einstellring und einem zweiten Einstellring, die um eine Drehachse gegeneinander drehbar gelagert sind und eine Kontaktfläche zur gegenseitigen Anlage aufweisen, wobei die Kontaktfläche in einer Drehrichtung des ersten Einstellungsrings gegen den zweiten Einstellring um die Drehachse eine axiale Steigung aufweist, so dass durch Drehung der beiden Einstellringe relativ zueinander die axiale Gesamtbauhöhe der beiden an der Kontaktfläche aneinander anliegenden Einstellringe veränderbar ist. Der zweite Einstellring ist an seinem Außen- oder Innenumfang über einen Vorsprung festlegbar, während der erste Einstellring über eine an einem Innen- oder Außenumfang ausgebildete Verzahnung relativ zum zweiten Einstellring verdrehbar ist, wodurch das gesamte Axialmaß der Abstandsscheibe veränderbar ist. Am zweiten Einstellring ist eine Rastzunge an- oder eingeformt, die mit der Verzahnung am Innen- oder Außenumfang des ersten Einstellrings die relativ verdrehte Lage festlegend zusammenwirkt.

Der aus der WO 2016/029896 A1 bekannte mit einem Wälzlager in Wirkverbindung stehende Ring und der mit seiner anderen Stirnfläche mit einem Widerlager in Wirkverbindung stehende Ring können zusammengenommen als Gleitelement verwendet werden, wobei beide Ringe um eine Drehachse gegeneinander drehbar gelagert sind und eine Kontaktfläche zur gegenseitigen Anlage der beiden Ringe aufweisen, die in einer Drehrichtung des mit dem Wälzlager in Wirkverbindung stehenden Rings gegen den mit dem Widerlager in Wirkverbindung stehenden Ring eine axiale Steigung aufweist, so dass durch Drehung der beiden Ringe relativ zueinander die axiale Gesamtbauhöhe der beiden an der Kontaktfläche aneinanderliegenden Ringe veränderbar ist, und die beiden Ringe bei ihrer Relativbewegung um die Drehachse entlang ihrer Kontaktfläche über einen Verstellwinkel in verschiedenen Winkelpositionen aneinander arretierbar sind und die Arretierung lösbar ist.

Derartige, aus zwei Ringen bestehende Elemente, die als Gleitelemente Verwendung finden können, sind auch aus der DE 10 2005 022 808 A1, DE 199 40 969 A1, DE 10 2014 213 134 A1 und der US 2010/0126821 A1 bekannt.

Der Erfindung liegt die Aufgabe zugrunde, ein Gleitelement für ein Führungssystem bereitzustellen, dass eine leichte Montage zwischen den relativ zueinander bewegbaren Führungsteilen und eine einfache nachträgliche Einstellung eines toleranzbedingten Führungsspiels ermöglicht.

Die Aufgabe wird erfindungsgemäß dadurch gelöst, dass bei einem Gleitelement der eingangs genannten Art vorgesehen ist, dass das elastische Element eine Eingriffsöffnung aufweist, in die ein Werkzeug zur Ausübung einer axialen Druckkraft auf das elastische Element zwecks Entriegelung des Formschlusses und zum Drehen des zweiten Teils gegenüber dem ersten Teil zwecks Verstellung der Winkelposition axial einsetzbar ist. Insbesondere ist vorgesehen, dass sich beim Lösen der Arretierung die axiale Gesamtbauhöhe der beiden Teile nicht ändert.

Die Befestigungsseite und/oder die Gleitfläche des Gleitelements können an der vom zweiten Teil abgewandten Seite des ersten Teils bzw. an der vom ersten Teil abgewandten Seite des zweiten Teils ausgebildet sein. Bei dieser Ausführung kann das Gleitelement aus nicht mehr als zwei Teilen bestehen und daher besonders einfach konstruiert sein.

Die Befestigungsseite und/oder die Gleitfläche des Gleitelements können jedoch auch jeweils an einem weiteren Bauteil ausgebildet sein, das an der vom zweiten Teil abgewandten Seite des ersten Teils bzw. der vom ersten Teil abgewandten Seite des zweiten Teils angeordnet ist. Insbesondere das die Gleitfläche bildende Material kann ein Kunststoff-Material mit geeigneten tribologischen Eigenschaften sein. Das Gleitelement ermöglicht somit eine schmiermittelfreie Gleitführung und ist dadurch wartungsarm und sauber.

Das Material an der Befestigungsseite des ersten Teils besteht ebenfalls vorzugsweise aus Kunststoff, so dass sich daran einfache Befestigungsmittel zur Festlegung des ersten Teils an dem betreffenden Führungsteil anformen lassen.

Insbesondere sind das erste Teil und das zweite Teil und/oder bei Verwendung eines die Gleitfläche und/oder die Befestigungsseite aufweisenden weiteren Bauteils, das Bauteil aus Kunststoff gefertigt.

Die Arretierung der beiden Teile in den verschiedenen Winkelpositionen kann derart ausgebildet sein, dass sie in jeder Winkelposition von außen, insbesondere von der Befestigungsseite und/oder der die Gleitfläche aufweisenden Seite her, lösbar ist.

Die Drehachse der beiden gegeneinander drehbar gelagerten Teile verläuft vorzugsweise senkrecht zur Gleitfläche und zur Befestigungsseite des Gleitelements. Sie kann bei speziellen Ausführungen des erfindungsgemäßen Gleitelements jedoch auch in einem Winkel ungleich 90° und ungleich 0° zur Gleitfläche und/oder zur Befestigungsseite des Gleitelements verlaufen.

Die das Gleitelement bildenden beiden Teile können scheibenförmig ausgebildet und durch eine zylindrische Führung an ihren äußeren Randbereichen gegeneinander drehbar gelagert sein.

Zur Festlegung des ersten Teils an einem der Führungsteile kann das erste Teil zwei federnde Laschen und in deren freien Endbereichen jeweils einen sich nach außen erstreckenden Zapfen aufweisen, der jeweils in eine entsprechende Ausnehmung im Führungsteil einrastbar ist.

Der die verschiedenen Winkelpositionen, in denen die beiden Teile bei ihrer Relativdrehung um die Drehachse arretierbar sind, überstreichende Verstellwinkel ist vorzugsweise größer als 100°.

Die Anzahl der Winkelpositionen ist vorzugsweise größer als fünf, insbesondere zwischen sieben und zwölf.

Benachbarte Winkelpositionen sind vorzugsweise durch gleiche Winkel voneinander beabstandet.

Die Kontaktfläche zwischen den beiden Teilen kann mehrere Steigungsbereiche, die die axiale Steigung aufweisen, haben. Diese können in Drehrichtung des zweiten Teils gegen das erste Teil um die Drehachse aneinander anschließen oder getrennt voneinander verteilt sein. Die Steigungsbereiche können vom gleichen Niveau ausgehen und die gleiche Steigungshöhe aufweisen.

Um eine möglichst feinstufige Verstellung zu erreichen, sollte der die verschiedenen Winkelpositionen überstreichende Verstellwinkel möglichst groß sein. Die Größe des Verstellwinkels ist jedoch daran zu bemessen, dass bei größtmöglicher Einstellung der axialen Gesamtbauhöhe der beiden Teile noch eine ausreichende Kontaktierung entlang der Kontaktfläche der beiden Teile vorhanden ist, die von außen auf das Gleitelement wirkende Belastungen aufnimmt und die auch etwa der wirkenden Verschleißfläche der Gleitfläche des Gleitelements entspricht. Denn Bereiche der Gleitfläche, die nicht im Bereich des Druckbelastungsflusses liegen, können dem Druck durch Verbiegung ausweichen, so dass die Bereiche unmittelbar gegenüber der Kontaktfläche den Belastungsanteil bei angenommener Konstantverteilung der abseits liegenden Bereiche zu einem großen Teil mit aufnehmen müssen.

Weiterhin wird die Größe des Verstellwinkels durch die Anzahl der axialen Steigungsbereiche über den Umkreis bezüglich der Drehachse festgelegt. Bei einem einzelnen axialen Steigungsbereich, der über den Umkreis von 360° ansteigt, ergibt sich bei zunehmender axialer Gesamtbauhöhe der Teile ein Kontaktbereich, der unsymmetrisch gegenüber der Gleitfläche des Gleitelements angeordnet ist. Dadurch ergibt sich bei Anwendungen, z. B. mit zwei gegenüberliegenden Gleitelementen, bei denen von außen wirkende Momente abgestützt werden sollen, ein ungünstiger wirksamer Stützabstand, der diese Momente aufnehmen kann.

Deshalb lässt sich ein solcher Anwendungsfall mit über den Umkreis bezüglich der Drehachse symmetrisch angeordneten Steigungsbereichen lösen, wodurch sich mehrere Kontaktbereiche ergeben, die symmetrisch gegenüber der Gleitfläche verteilt sind und bei richtig gewählter Drehorientierungslage einen möglichst großen Stützabstand gegen Momente gewährleisten.

Insbesondere können zwei Steigungsbereiche vorgesehen sind, die sich in der Drehrichtung aneinander anschließend um jeweils 180° erstrecken, wobei der Kontaktbereich der beiden Teile entlang jedes Steigungsbereichs in jeder Winkelposition sich mindestens über 20°, vorzugsweise über mindestens 60° erstreckt. Bei dieser Ausführung können zwischen sieben und zehn Verstellstufen realisiert werden, ohne dass die Stabilität der Arretierung gefährdet ist.

Das elastische Element kann am zweiten Teil einstückig angeformt sein.

Die Vertiefungen oder Erhöhungen des ersten Teils und der Vorsprung bzw. die Vertiefung am elastischen Element des zweiten Teils können axial bezüglich der Drehachse der beiden Teile angeordnet sein, wobei das elastische Element aus seinem Eingriff in eine der Vertiefungen bzw. Erhöhungen auf dem Teilkreis des ersten Teils durch Verbiegen in axialer Richtung lösbar sein kann.

Diese formschlüssige Verbindung kann durch ein Werkzeug, in bestimmten Einbaulagen auch ohne Werkzeug, von der Seite der Gleitfläche her durch eine ein Verbiegen des elastischen Elements bewirkende Zugkraft und/oder von der Befestigungsseite des Gleitelements durch eine das Verbiegen des elastischen Elements bewirkende Druckkraft auf das elastische Element entriegelt werden. In der Entriegelungsposition kann mit dem Werkzeug, in bestimmten Einbaulagen auch ohne Werkzeug, die Winkelposition des zweiten Teils gegenüber dem ersten Teil und damit die Gesamtbauhöhe des Gleitelements verstellt werden.

Dazu kann die Öffnung des zweiten Teils an dessen die Gleitfläche aufweisenden Seite angeordnet sein, so dass durch Ausübung einer Zugkraft von der Seite der Gleitfläche her der Formschluss entriegelt werden kann.

Das elastische Element kann an seinem dem Vorsprung bzw. der Vertiefung gegenüberliegenden Ende am Rand der Öffnung befestigt, insbesondere einstückig angeformt sein.

Weiterhin kann die Öffnung des zweiten Teils als axiale Durchgangsöffnung ausgebildet sein und das erste Teil eine zur Durchgangsöffnung des zweiten Teils fluchtende Durchgangsöffnung aufweisen, so dass der Formschluss auch von der Befestigungsseite her durch Ausübung einer das Verbiegen des elastischen Elements bewirkenden Druckkraft auf das elastische Element entriegelt werden kann.

Insbesondere kann die Öffnung bzw. Durchgangsöffnung des zweiten Teils als eine bezüglich der Drehachse zentrale Öffnung bzw. Durchgangsöffnung ausgebildet sein. Das elastische Element kann sich in diesem Fall längs einer die Drehachse schneidenden Zentrale durch die Öffnung bzw. Durchgangsöffnung erstrecken. Die Durchgangsöffnung des zweiten Teils und die Durchgangsöffnung des ersten Teils können konzentrisch in Bezug auf die Drehachse ausgebildet sein.

Um eine feinstufige Verstellung über den Verstellwinkel zu erreichen, sollte der Radius des die Vertiefungen oder Erhöhungen aufweisenden Teilkreises des ersten Teils relativ zu dessen Erstreckung senkrecht zur Drehachse möglichst groß sein. Daher kann es angebracht sein, eine Ausnehmung im Randbereich der Öffnung des zweiten Teils vorzusehen, in die sich das elastische Element mit seinem freien Ende und dem daran angeordneten Vorsprung bzw. der daran angeordneten Vertiefung hinein erstreckt.

Vorzugsweise ist die Ausnehmung in einem Bereich der die Steigung aufweisenden Kontaktfläche mit möglichst großer axialer Höhe angeordnet, um eine Verbiegung des elastischen Elements über einen größeren Weg zu ermöglichen. Dabei kann die Höhe des Vorsprungs oder die Tiefe der Vertiefung am freien Ende des elastischen Elements so dimensioniert sein, dass sich ein möglichst stabiler Formschluss bei Arretierung der beiden Teile in den Winkelpositionen ergibt.

Die Eingriffsöffnung des elastischen Elements kann als Durchgangsöffnung im elastischen Element vorgesehen sein, so dass durch ein geeignetes Werkzeug sowohl eine axiale Druckkraft als auch bei Durchgreifen des Werkzeugs durch die Eingriffsöffnung und Hinterschneidung derselben eine Zugkraft auf das elastische Element ausgeübt werden kann.

Die Eingriffsöffnung kann insbesondere als eine bezüglich der Drehachse zentrale Öffnung im elastischen Element vorgesehen sein.

Die zentrale Eingriffsöffnung kann an der zur Befestigungsseite des Gleitelements her weisenden Seite des elastischen Elements eine in Bezug auf die Drehachse kreissektorförmige Ausnehmung aufweisen, die zumindest in ihren radialen Seitenbereichen axial gerichtete Anschlagsflächen an ihrem Grund aufweist. In die Eingriffsöffnung kann das freie Ende eines Werkzeugs eingreifen, das einen dem Radius des Kreissektors der Ausnehmung angepassten radialen Vorsprung aufweist. Nach Drehen des Werkzeugs mit dem Vorsprung über eine der axialen Anschlagflächen am Grund der Ausnehmung kann von der Befestigungsseite des Gleitelements her von dem durch die Durchgangsöffnung des ersten Teils geführten Werkzeug eine das Verbiegen des elastischen Elements bewirkende Druckkraft auf das elastische Element zur Entriegelung des Formschlusses ausgeübt werden. Alternativ kann die Drucckraft auch durch einen in Höhe der Ausnehmung vom freien Ende des Werkzeugs beabstandeten weiteren radialen Vorsprung des Werkzeugs auf das elastische Element ausgeübt werden. In der Entriegelungsposition des elastischen Elements kann durch Ausübung einer Drehkraft auf die eine oder andere radiale Seitenwand der Ausnehmung das elastische Element und mit ihm das zweite Teil gegenüber dem ersten Teil in eine andere Winkelposition verstellt werden.

Die Eingriffsöffnung kann einen axialen Durchgangsbereich für das freie Ende des Werkzeugs zwecks Durchgriffs desselben von der die Gleitfläche aufweisenden Seite zur Ausübung einer Zugkraft auf das elastische Element aufweisen. Ist das freie Ende des Werkzeugs, wie oben beschrieben, mit einem radialen Vorsprung versehen und der axiale Durchgangsbereich entsprechend der Querschnittsgeometrie des freien Endes des Werkzeugs ausgebildet, kann im Bereich der kreissektorförmigen Ausnehmung der Eingriffsöffnung durch Drehen des Werkzeugs der radiale Vorsprung über die eine oder andere axiale Anschlagfläche am Grund der Ausnehmung greifen und durch anschließende Ausübung einer Zugkraft durch den radialen Vorsprung auf die axiale Anschlagfläche ein Verbiegen des elastischen Elements und eine Entriegelung des Formschlusses bewirkt werden. Durch anschließende Ausübung einer Drehkraft auf die an die axiale Anschlagfläche anschließende radiale Seitenwand der kreissektorförmigen Ausnehmung kann das zweite Teil gegenüber dem ersten Teil in eine andere Winkelposition verstellt werden.

Zwecks in Bezug auf die Drehachse symmetrischer Aufbringung der Druck- und Zugkräfte sowie der Drehkräfte in der zentralen Eingriffsöffnung des elastischen Elements kann eine der kreissektorförmigen Ausnehmung radial gegenüberliegende zweite kreissektorförmige Ausnehmung in der Eingriffsöffnung an der zur Befestigungsseite weisenden Seite des elastischen Elements vorgesehen sein. Die zweite kreissektorförmige Ausnehmung kann spiegelbildlich bezüglich der die Drehachse enthaltenden Ebene senkrecht zur Erstreckungsrichtung des elastischen Elements ausgebildet. Entsprechend dieser Ausbildung der Eingriffsöffnung im elastischen Element kann das Werkzeug an seinem freien Ende zwei gegenüberliegende radiale Vorsprünge aufweisen, mit denen die axialen Anschlagflächen der gegenüberliegenden kreissektorförmigen Ausnehmungen beaufschlagbar sind und mit denen eine Drehkraft in der einen oder anderen Drehrichtung auf die gegenüberliegenden radialen Seitenflächen der gegenüberliegenden kreissektorförmigen Ausnehmungen ausgeübt werden kann.

Ein derartiges Eingriffswerkzeug ist ebenfalls Gegenstand der vorliegenden Erfindung, wird jedoch hier nicht beansprucht.

Das Eingriffswerkzeug kann einen stabförmigen Bereich mit einem daran angeordneten Griffteil aufweisen. Am freien, dem Griffteil gegenüberliegenden Endbereich kann mindestens ein radialer Vorsprung angeordnet sein. Vorzugsweise sind zwei radial gegenüberliegende Vorsprünge vorgesehen. Es können auch drei oder mehr radiale Vorsprünge in Frage kommen, wobei benachbarte Vorsprünge vorzugsweise einen gleichen Abstand aufweisen und somit um die Achse des stabförmigen Bereichs gleichmäßig verteilt sind. Der stabförmige Bereich kann zylinderförmig ausgebildet sein.

In dem durch die stufenförmige Verengung gebildeten Bereich geringeren Radius kann der Vorsprung bzw. können die Vorsprünge in der vorstehend beschriebenen Anordnung angeformt sein. Der Durchmesser des stabförmigen Bereichs kann so gewählt sein, dass er größer ist als der Durchmesser des axialen Durchgangsbereichs der Eingriffsöffnung des elastischen Elements, so dass eine Druckkraft auf das elastische Element von der die Gleitfläche aufweisenden Seite des Gleitelements her durch die stufenförmige Verengung ausgeübt werden kann. Beaufschlagt die stufenförmige Verengung die Oberfläche des elastischen Elements, ist der axiale Abstand der radialen Vorsprünge am freien Ende des Werkzeugs von der stufenförmigen Verengung so bemessen, dass die Vorsprünge in den Bereich der kreissektorförmigen Ausnehmung an der zur Befestigungsseite des Gleitelements weisenden Seite des elastischen Elements greifen und in dieser, wie oben beschrieben, gegen die eine oder andere radiale Seitenwand der kreissektorförmigen Ausnehmung durch Drehen des Werkzeugs bewegt werden können.

Erfindungsgemäße Gleitelemente können wie im Folgenden beschrieben zwischen zwei zum Beispiel als Vierkantrohre ausgebildete Führungsteile einer Teleskopführung montiert werden.

In einem ersten Schritt wird vorzugsweise in einem ersten Endbereich des inneren Teleskopteils an einer Führungswand oder mehreren Führungswänden jeweils ein erfindungsgemäßes Gleitelement mit seiner Befestigungsseite am inneren Teleskopteil festgelegt und das innere Teleskopteil mit dem bzw. den daran festgelegten Gleitelementen in das äußere Teleskopteil eingeschoben.

In einem zweiten Schritt wird zwischen dem dem ersten Endbereich gegenüberliegenden zweiten Endbereich des inneren Teleskopteils und dem äußeren Teleskopteil ein erstes Gleitelement mit seiner Gleitfläche auf eine Seitenwand des inneren Teleskopteils aufgelegt und in das äußere Teleskopteil so weit eingeschoben, bis die Befestigungsposition zur Befestigung des Gleitelements mit seiner Befestigungsseite am äußeren Teleskopteil erreicht ist. Daraufhin erfolgt die Befestigung des Gleitelements am äußeren Teleskopteil. Beim vorstehend beschriebenen Ausführungsbeispiel werden dazu in der Befestigungsposition die an den federnden Laschen des ersten Teils des Gleitelements angeordneten Zapfen in entsprechende Ausnehmungen im äußeren Teleskopteil eingerastet. Anschließend kann ein weiteres Gleitelement, das mit seiner Gleitfläche auf eine weitere Seitenwand des inneren Teleskopteils aufgelegt ist, zwischen dem zweiten Endbereich des inneren Teleskopteils und dem äußeren Teleskopteil eingeschoben werden, bis die Befestigungsposition für dieses Gleitelement am äußeren Teleskopteil erreicht ist. Das zweite Gleitelement wird daraufhin am äußeren Teleskopteil wie das erste Gleitelement befestigt.

Gegebenenfalls können weitere Gleitelemente, zum Beispiel ein drittes und ein viertes Gleitelement, wie vorstehend für das erste und zweite Gleitelement beschrieben, am äußeren Teleskopteil befestigt werden.

Unter Umständen können mehrere Gleitelemente mit ihren Gleitflächen auf den zweiten Endbereich des inneren Teleskopteils mit ihren Gleitflächen aufgelegt und in das äußere Teleskopteil so weit eingeschoben werden, bis die Befestigungsposition zur Festlegung der Gleitelemente mit ihren Befestigungsseiten am äußeren Teleskopteil erreicht ist.

Beim vorstehend beschriebenen Ausführungsbeispiel sind im Bereich der sich in ihrer Befestigungsposition befindenden Gleitelemente Durchgangsöffnungen im äußeren Teleskopteil vorgesehen, durch die ein Werkzeug mit seinem Eingriffsende von außen in die Eingriffsöffnung des elastischen Elements zum Entriegeln des Formschlusses und Verdrehen des zweiten Teils des Gleitelements in eine andere Winkelposition einsetzbar ist.

Die am inneren Teleskopteil festgelegten Gleitelemente können mit dem inneren Teleskopteil in eine Position innerhalb des äußeren Teleskopteils verschoben werden, in der die Eingriffsöffnungen in den elastischen Elementen der Gleitelemente fluchtend zu weiteren Durchgangsöffnungen im äußeren Teleskopteil angeordnet sind. In dieser Position lässt sich die Gesamtbauhöhe des jeweiligen an einer Längsseite des inneren Teleskopteils festgelegten Gleitelements verstellen, indem ein Werkzeug mit seinem Eingriffsende durch die Durchgangsöffnung im äußeren Teleskopteil von außen in die Eingriffsöffnung des elastischen Elements eingesetzt wird. Wie vorstehend beschrieben, kann der Formschluss durch Ausübung einer das Verbiegen des elastischen Elements bewirkenden Zugkraft entriegelt und durch Drehen des Werkzeugs die Gesamtbauhöhe des Gleitelements verstellt werden.

Das vorstehend beschriebene Führungssystem mit den darin montierten Gleitelementen und die oben beschriebene Montage des Führungssystems mit den erfindungsgemäßen Gleitelementen sind ebenfalls Gegenstand der vorliegenden Erfindung.

Ausführungsbeispiele des erfindungsgemäßen Gleitelements, der Verstellung der Gesamtbauhöhe des Gleitelements sowie der Festlegung der erfindungsgemäßen Gleitelemente an Führungsteilen eines Führungssystems werden im Folgenden anhand der Zeichnung näher beschrieben.

In der Zeichnung zeigen:
- Figur 1: das erste Teil und das zweite Teil eines Gleitelements in axial getrennter Position in einer auf die Befestigungsseite des Gleitelements gerichteter perspektivischen Ansicht,
- Figur 2: das erste Teil und zweite Teil des Gleitelements in axial getrennter Position in einer auf die Gleitfläche des Gelenkelements gerichteter perspektivischen Ansicht,
- Figur 3: eine seitliche Ansicht in Richtung des Pfeils III in Figur 1 auf das aus dem ersten Teil und dem zweiten Teil zusammengesetzten Gleitelement mit der in Figur 1 dargestellten Winkelposition der beiden Teile,
- Figur 4: eine seitliche Ansicht in Richtung des Pfeils IV in Figur 1 auf das aus den beiden Teilen zusammengesetzte Gleitelement mit der in Figur 1 dargestellten Winkelposition der beiden Teile,
- Figur 5: eine Draufsicht auf die Befestigungsseite des Gleitelements mit der in Figur 1 dargestellten Winkelposition der beiden Teile,
- Figur 6: eine Draufsicht auf die Befestigungsseite des Gleitelements mit der in Figur 2 dargestellten Winkelposition der beiden Teile,
- Figur 7: eine die Zuführung eines Werkzeugs von der die Gleitfläche aufweisenden Seite des zweiten Teils zur Eingriffsöffnung des elastischen Elements zeigende perspektivische Ansicht,
- Figur 8: eine die Eingriffsposition des Werkzeugs in die Eingriffsöffnung des elastischen Elements gemäß Fig. 7 zeigende perspektivische Ansicht auf die der Gleitfläche gegenüberliegende Seite des zweiten Teils,
- Figur 9: eine die Zuführung des Werkzeugs in die Eingriffsöffnung des elastischen Elements von der der Gleitfläche gegenüberliegenden Seite des zweiten Teils her zeigende perspektivische Ansicht auf die die Gleitfläche aufweisende Seite des zweiten Teils,
- Figur 10: eine den Eingriff des Werkzeugs in die Eingriffsöffnung des elastischen Elements gemäß Fig. 9 und Ausübung einer Druck- und Drehkraft zeigende perspektivische Ansicht auf die der Gleitfläche gegenüberliegende Seite des zweiten Teils,
- Figur 11: eine perspektivische Ansicht eines inneren Vierkantrohrs mit darauf festgelegten Gleitelementen vor Einbringung in ein äußeres Vierkantrohr eines entsprechenden Führungssystems zur Darstellung eines ersten Montageschritts des Führungssystems,
- Figur 12: eine perspektivische Ansicht des in das äußere Vierkantrohr eingeschobenen inneren Vierkantrohrs gemäß Figur 11 mit auf der Oberseite angeordnetem Gleitelement zur Darstellung eines zweiten Montageschritts des Führungssystems,
- Figur 13: eine perspektivische Ansicht des in das äußere Vierkantrohr eingeschobenen inneren Vierkantrohrs gemäß Figur 12 mit einem auf der Unterseite angeordneten Gleitelement zur Darstellung eines weiteren Montageschritts des Führungssystems,
- Figur 14: eine perspektivische Ansicht des Führungssystems mit vollständiger Anordnung der Gleitelemente am inneren und äußeren Vierkantrohr in einer Verschiebeposition der beiden Vierkantrohre, in der die am inneren Vierkantrohr festgelegten Gleitelemente sowie die an den Innenseiten des äußeren Vierkantrohrs festgelegten Gleitelemente in ihrer jeweiligen Gesamtbauhöhe durch Einführung eines Werkzeugs durch die Durchgangsöffnungen in den Seitenwänden des äußeren Vierkantrohrs verstellbar sind, und
- Figur 15: eine perspektivische Ansicht auf das Führungssystem nach Figur 14, mit in die Durchgangsöffnungen an der Oberseite des äußeren Vierkantrohrs eingreifenden Werkzeugen.

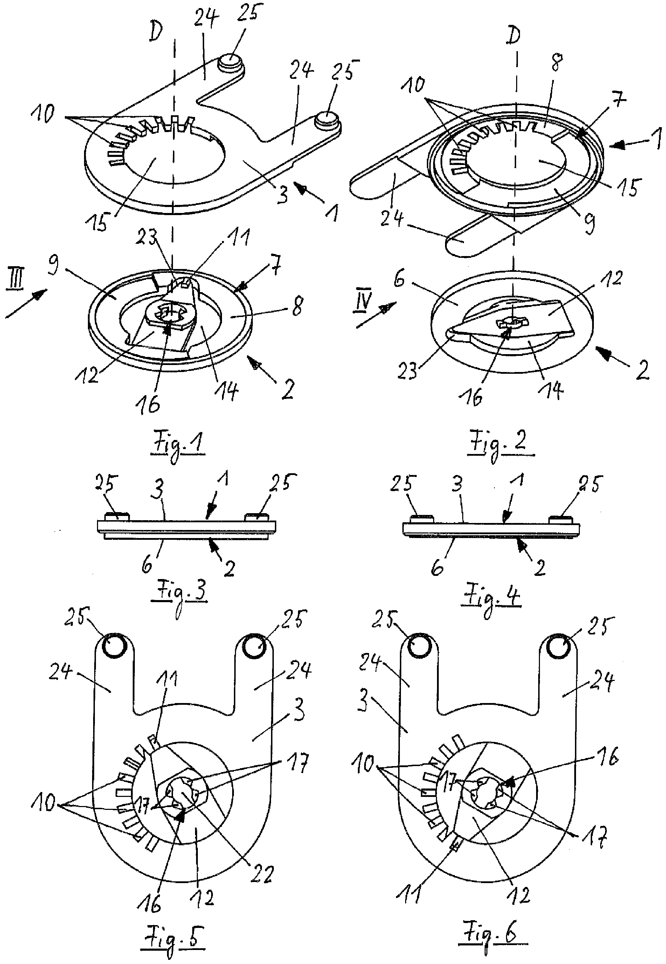

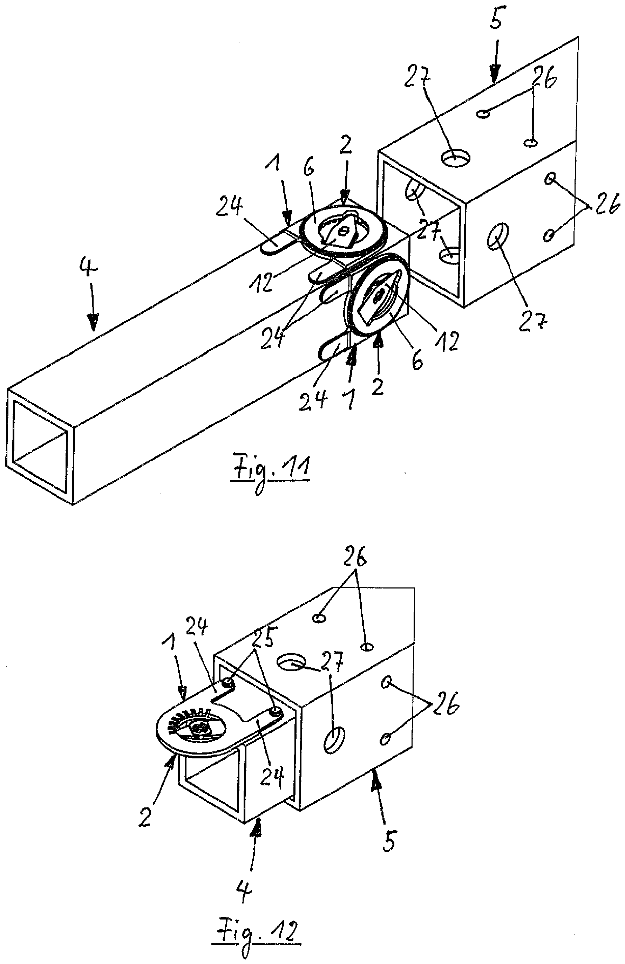

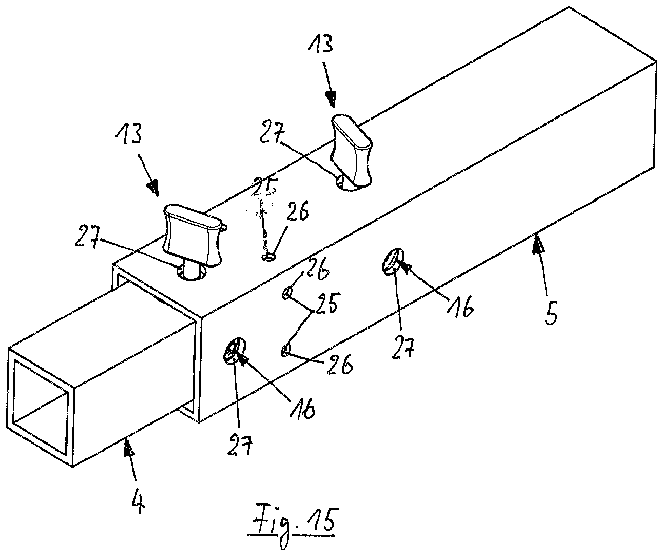

Wie insbesondere aus den Figuren 1 und 2 hervorgeht, besteht das Gleitelement aus einem ersten Teil 1 und einem zweiten Teil 2. Das erste Teil weist eine Befestigungsseite 3 zur Festlegung an einem ersten Führungsteil eines Führungssystems auf, z. B. an dem in den Figuren 11-15 gezeigten inneren Vierkantrohr 4 und/oder äußeren Vierkantrohr 5. Das zweite Teil 2 weist an einer der Befestigungsseite 3 des ersten Teils 1 gegenüberliegenden Seite eine Gleitfläche 6 zur gleitenden Anlage an einem relativ zum ersten Führungsteil bewegbaren zweiten Führungsteil auf.

Das die Gleitfläche 6 aufweisende zweite Teil 2 ist aus einem Kunststoffmaterial mit geeigneten tribologischen Eigenschaften gefertigt. Die beiden Teile 1 und 2 sind scheibenförmig ausgebildet und gegeneinander drehbar um eine Drehachse D gelagert. Zur drehbaren Lagerung ist eine zylindrische Führung an den äußeren Randbereichen der beiden Teile 1 und 2 vorgesehen. Die zylindrische Führung weist einen Formschluss gegen Trennung der beiden Teile 1 und 2 in axialer Richtung bezüglich der Drehachse auf.

Die beiden Teile 1 und 2 weisen eine Kontaktfläche 7 zur gegenseitigen Anlage der beiden Teile 1 und 2 auf, wobei die Kontaktfläche 7 in einer Drehrichtung des zweiten Teils 2 gegen das erste Teil 1 um die Drehachse D eine axiale Steigung aufweist, so dass durch Drehung der beiden Teile 1 und 2 relativ zueinander die axiale Gesamtbauhöhe der beiden an der Kontaktfläche 7 aneinanderliegende Teile 1 und 2 veränderbar ist. Die Kontaktfläche 7 weist zwei Steigungsbereiche 8 und 9 von je 180° auf, die im Umkreis um die Drehachse aneinander anschließen, vom gleichen Niveau ausgehen und die gleiche Gesamtsteigungshöhe aufweisen.

Das erste Teil weist auf einem Teilkreis bezüglich der Drehachse D mehrere Vertiefungen 10 auf, die mit einem Vorsprung 11 an einem am zweiten Teil 2 drehfest angeordneten elastischen Element 12 zur Bildung eines lösbaren Formschlusses in den beiden Drehrichtungen um die Drehachse D der beiden Teile 1 und 2 in verschiedenen durch die Vertiefungen 10 definierten Winkelpositionen zusammenwirken. Die Vertiefungen des ersten Teils 1 und der Vorsprung am elastischen Element 12 des zweiten Teils 2 sind axial in Bezug auf die Drehachse der beiden Teile 1 und 2 angeordnet, wobei das elastische Element 12 aus seinem Eingriff in eine der Vertiefungen 10 durch Verbiegen in axialer Richtung lösbar ist.

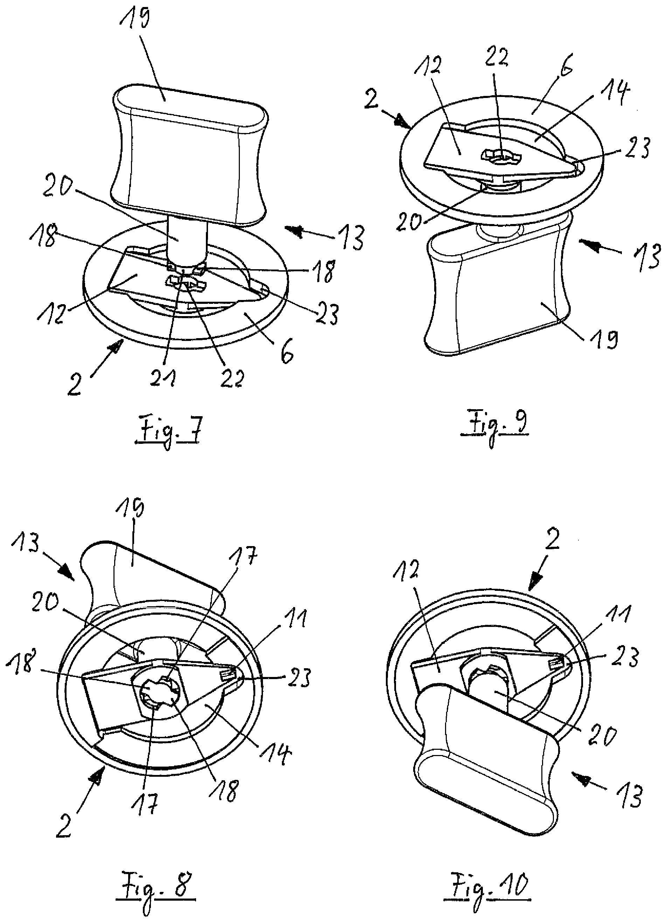

Die formschlüssige Verbindung kann durch ein Werkzeug 13, wie in den Figuren 7-10 gezeigt, von der Seite der Gleitfläche 6 des zweiten Elements 2 her durch eine ein Verbiegen des elastischen Elements 12 bewirkende Zugkraft und von der Befestigungsseite des ersten Teils 1 des Gleitelements her durch eine das Verbiegen des elastischen Elements 12 bewirkende Druckkraft auf das elastische Element 12 entriegelt werden. In der Entriegelungsposition kann mit dem Werkzeug 13 die Winkelposition des zweiten Teils 2 gegenüber dem ersten Teil 1 und damit die Gesamtbauhöhe des Gleitelements verstellt werden.

Dazu kann das zweite Teil 2 an der die Gleitfläche 6 aufweisenden Seite eine bezüglich der Drehachse D zentrale Durchgangsöffnung 14 aufweisen, wobei sich das elastische Element 12 längs einer die Drehachse D schneidenden Zentrale durch die Durchgangsöffnung 14 erstreckt und an seinem freien Ende den Vorsprung 11 aufweist, so dass durch Ausübung einer Zugkraft von der Seite der Gleitfläche 6 her der Formschluss entriegelt werden kann.

Das erste Teil 1 weist eine zur Durchgangsöffnung 14 des zweiten Teils 2 fluchtenden Durchgangsöffnung 15 auf, so dass der Formschluss auch von der Befestigungsseite 3 des ersten Teils 1 her durch Ausübung einer das Verbiegen des elastischen Elements 12 bewirkenden Druckkraft auf das elastische Element 12 entriegelt werden kann.

Dazu weist das elastische Element 12 eine bezüglich der Drehachse zentrale Eingriffsöffnung 16 auf, in die das Werkzeug 13 zur Ausübung der axialen Druckkraft oder Zugkraft auf das elastische Element 12 einsetzbar ist. Die Eingriffsöffnung 16 weist an der zur Befestigungsseite 3 des ersten Teils 1 weisenden Seite des elastischen Elements 12 zwei radial gegenüberliegende kreissektorförmige Ausnehmungen auf, die in ihren radialen Seitenbereichen axial gerichtete Anschlagsflächen 17 an ihrem Grund aufweisen.

Wie insbesondere aus Figur 7 hervorgeht, weist das freie Ende des Werkzeugs 13 zwei gegenüberliegende radiale Vorsprünge 18 auf, deren radiale Erstreckung dem Radius der kreissektorförmigen Ausnehmungen angepasst ist.

Wie insbesondere aus Figur 7 hervorgeht, weist das Werkzeug 13 ein Griffteil 19 und einen sich vom Griffteil 19 zum freien Ende erstreckenden stabförmigen Bereich 20 auf. An den stabförmigen Bereich 20 schließt sich über eine stufenförmige radiale Verengung ein sich bis zum freien Ende erstreckender zylinderförmiger Bereich 21 geringeren Durchmessers als der stabförmige Bereich 20 an. An dessen freiem Ende sind die gegenüberliegenden radialen Vorsprünge 18 mit einem axialen Abstand zur radialen Verengung des stabförmigen Bereichs 20 angeordnet.

Von den beiden gegenüberliegenden kreissektorförmigen Ausnehmungen ausgehend zu der zur Gleitfläche 6 hin weisenden Seite des elastischen Elements 12 ist ein axialer Durchgangsbereich 22 in der Eingriffsöffnung 16 des elastischen Elements 12 vorgesehen. Der Querschnitt des Durchgangsbereichs 22 ist dem Querschnitt des freien Endes des Werkzeugs 13 an dessen freiem Ende mit dem zylinderförmigen Bereich 21 und den daran angeformten radialen Vorsprüngen 18 angepasst. Der Abstand zwischen den radialen Vorsprüngen 18 und der stufenförmigen Verengung des stabförmigen Bereichs 20 des Werkzeugs 13 ist gleich oder größer als die axiale Erstreckung des Durchgangsbereichs 22 in der Eingriffsöffnung 16 des elastischen Elements 12. Von der die Gleitfläche 6 aufweisenden Seite des zweiten Teils 2 kann das freie Ende des Werkzeugs 13, wie in Figur 7 gezeigt, durch den Durchgangsbereich 22 geführt werden, so dass die beiden radialen Vorsprünge 18 in den Bereich der kreissektorförmigen Ausnehmungen an der anderen Seite des elastischen Elements 12 eingreifen. In dieser Position kann das Werkzeug in die eine oder andere Richtung um die Drehachse D gedreht werden, so dass die radialen Vorsprünge 18 unter die Anschlagflächen 17 der kreissektorförmigen Ausnehmungen gelangen, wie in Figur 8 gezeigt ist. Durch Ausübung einer Zugkraft gegen die Anschlagflächen 17 mittels des Werkzeugs 13 kann der Formschluss zwischen den beiden Teilen 1 und 2 durch Verbiegen des elastischen Elements 12 in Richtung der Zugkraft entriegelt werden. Durch gleichzeitige oder anschließende Ausübung einer Drehkraft durch das Werkzeug 13, bei der die Vorsprünge 18 gegen die radialen Seitenwände der kreissektorförmigen Ausnehmungen wirken, kann das elastische Element 12 mit dem zweiten Teil 2 aus der eingestellten Winkelposition in eine andere Winkelposition gedreht und dadurch die Gesamtbauhöhe des Gleitelements verstellt werden.

Ebenso kann, wie in den Figuren 9 und 10 gezeigt, eine Verstellung der Gesamtbauhöhe des Gleitelements durch das Werkzeug 13 von der der Gleitfläche 6 gegenüberliegenden Seite, von der Befestigungsseite 3 des Gleitelements, her vorgenommen werden. Dazu wird das Werkzeug durch die Durchgangsöffnung 15 des ersten Teils 1 zur Eingriffsöffnung 16 des elastischen Elements hin geführt, wie in Figur 9 gezeigt. Durch Beaufschlagung der axialen Anschlagflächen 17 der beiden kreissektorförmigen Ausnehmungen mit den radialen Vorsprüngen 18 oder durch Beaufschlagung des elastischen Elements 12 mit der radialen Verengung des stabförmigen Bereichs 20 des Werkzeugs 13 kann eine axiale Druckkraft auf das elastische Element ausgeübt werden, so dass dieses sich in Richtung auf die Gleitfläche 6 hin verbiegt und der Formschluss zwischen dem Vorsprung 11 des elastischen Elements 12 und der in der eingestellten Winkelposition befindlichen Vertiefung 10 im ersten Teil 1 entriegelt werden kann. Durch Drehung des Werkzeugs und Anschlag der radialen Vorsprünge 18 gegen die radialen Seitenwände der kreissektorförmigen Ausnehmungen kann somit ebenfalls eine andere Winkelposition zwischen den beiden Teilen 1 und 2 eingestellt und die Gesamtbauhöhe des Gleitelements verändert werden.

Wie aus den Figuren 1-10 hervorgeht, ist eine radiale Ausnehmung 23 im Randbereich der zentralen Öffnung 14 des zweiten Teils 2 vorgesehen, in die sich das elastische Element 12 mit seinem freien Ende und dem daran angeordneten Vorsprung 11 hinein erstreckt. Die radiale Ausnehmung 23 ist, wie aus Figur 1 hervorgeht, in einem Bereich der Kontaktfläche 7 mit größerer axialer Höhe angeordnet, um eine Verbiegung des elastischen Elements 12 über einen möglichst großen Weg zu ermöglichen. Dabei sind die Höhe des Vorsprungs 11 und die Tiefe der Vertiefung 10 im ersten Teil 1 so dimensioniert, dass sich ein möglichst stabiler Formschluss der beiden Teile in den Winkelpositionen ergibt.

Das elastische Element 12 ist einstückig in der Durchgangsöffnung 14 des zweiten Teils angeformt.

Zur Festlegung des ersten Teils 1 an einem der in den Figuren 11-15 gezeigten Vierkantrohre 4 und 5 ist das erste Teil 1 mit zwei federnden Laschen 24 versehen, die eine geringere Dicke als der übrige Bereich des Teils 1 aufweisen und in deren freien Endbereichen jeweils ein sich innen an der Befestigungsseite 3 nach außen erstreckender Zapfen 25 angeordnet ist. Die Laschen 24 bilden mit der Befestigungsseite 3 eine Ebene. Die Zapfen 25 sind druckknopfartig ausgebildet, so dass sie in entsprechende Ausnehmungen 26, wie in den Figuren 11-15 gezeigt, im äußeren Vierkantrohr 5 einrastbar sind.

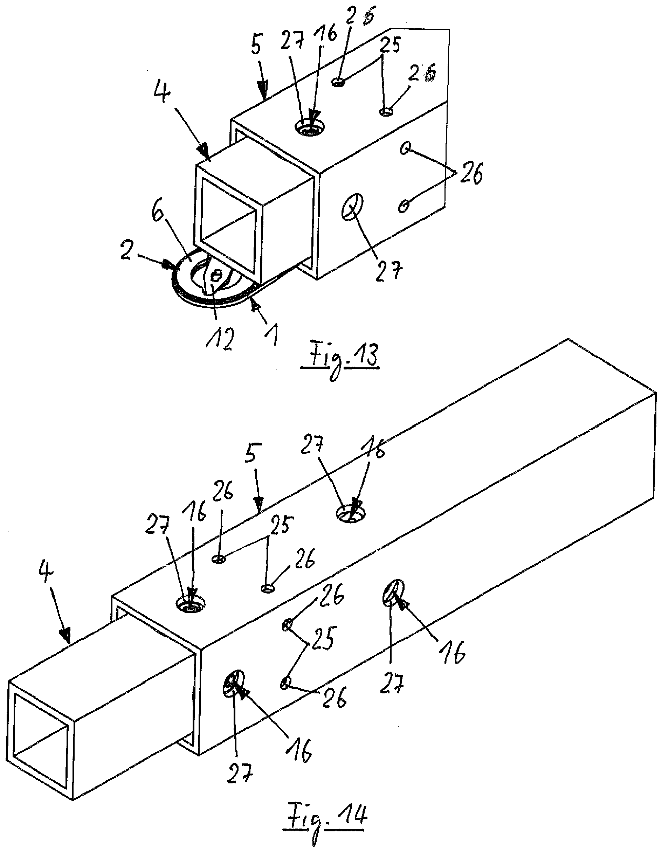

Zur Montage der vorstehend beschriebenen Gleitelemente zwischen einem inneren Vierkantrohr 4 und einem äußeren Vierkantrohr 5 können in einem ersten Schritt Gleitelemente in einem ersten Endbereich des inneren Vierkantrohrs 4 an den vier Seitenwänden gemäß Figur 11 festgelegt und mit dem inneren Vierkantrohr 4 in das äußere Vierkantrohr 5 eingeschoben werden. In einem zweiten Schritt kann zwischen dem dem ersten Endbereich gegenüberliegenden zweiten Endbereich des inneren Vierkantrohrs 4 zunächst ein erstes Gleitelement, dessen Gleitfläche 6, wie in Figur 12 gezeigt, auf eine Seitenwand des inneren Vierkantrohrs 4 aufgelegt ist, in das äußere Vierkantrohr 5 so weit eingeschoben werden, bis eine Befestigungsposition zur Befestigung des Gleitelements mit seiner Befestigungsseite 3 am äußeren Vierkantrohr 5 erreicht ist. Daraufhin erfolgt die Befestigung des Gleitelements, indem die an den Laschen 24 angeformten Zapfen 25 in die Ausnehmungen 26 im äußeren Vierkantrohr 5 von innen her eingerastet werden könnten, wie in Figur 13 gezeigt.

Wie ebenfalls in Figur 13 dargestellt, wird anschließend ein weiteres Gleitelement, das mit seiner Gleitfläche 6 auf eine weitere Seitenwand des inneren Vierkantrohrs 4 aufgelegt ist, wie das erste Gleitelement zwischen den zweiten Endbereich des inneren Vierkantrohrs 4 und dem äußeren Vierkantrohr 5 eingeschoben, bis die Befestigungsposition für dieses Gleitelement am äußeren Vierkantrohr 5 erreicht ist. Das zweite Gleitelement wird daraufhin an der betreffenden Seitenwand wie das erste Gleitelement befestigt.

Ein drittes und ein viertes Gleitelement werden, wie vorstehend für das erste und zweite Gleitelement beschrieben, an den übrigen Seitenwänden des äußeren Vierkantrohrs 5 befestigt.

Zur Einstellung der Gesamtbauhöhe des Gleitelements und dadurch erzielter nachträglicher Einstellung eines toleranzbedingten Führungsspiels zwischen den Vierkantrohren 4 und 5 von außen ist das äußere Vierkantrohr 5 mit Durchgangsöffnungen 27 versehen, die durch einfache Bohrbearbeitung, ohne Fräs- oder Gewindebearbeitung, wie auch die für das Einrasten der Zapfen 25 vorgesehenen Ausnehmungen 26, in das äußere Vierkantrohr 5 eingebracht werden.

Die am inneren Vierkantrohr 4 festgelegten Gleitelemente können mit dem inneren Vierkantrohr 4 in eine Position relativ zum äußeren Vierkantrohr 5 verschoben werden, in der die Eingriffsöffnungen 16 in den elastischen Elementen 12 der Gleitelemente fluchtend zu weiteren Durchgangsöffnungen 27 im äußeren Vierkantrohr 5 angeordnet sind. In dieser Position lässt sich die Gesamtbauhöhe des jeweiligen an einer Längsseite des inneren Vierkantrohrs 4 festgelegten Gleitelements wiederum durch Einführung eines Werkzeugs 13 mit seinem Eingriffsende verstellen, um auch in diesem Bereich ein toleranzbedingtes Führungsspiel nachträglich von außen zu korrigieren.

### Bezugszeichenliste

- 1: erstes Teil
- 2: zweites Teil
- 3: Befestigungsseite
- 4: inneres Vierkantrohr
- 5: äußeres Vierkantrohr
- 6: Gleitfläche
- 7: Kontaktfläche
- 8: Steigungsbereich
- 9: Steigungsbereich
- 10: Vertiefung
- 11: Vorsprung
- 12: elastisches Element
- 13: Werkzeug
- 14: Durchgangsöffnung
- 15: Durchgangsöffnung
- 16: Eingriffsöffnung
- 17: Anschlagfläche
- 18: Vorsprung
- 19: Griffteil
- 20: stabförmiger Bereich
- 21: zylinderförmiger Bereich
- 22: Durchgangsbereich
- 23: Ausnehmung
- 24: Lasche
- 25: Zapfen
- 26: Ausnehmung
- 27: Durchgangsöffnung
- D: Drehachse

## Patentansprüche

1. Gleitelement für ein Führungssystem, das zwei relativ zueinander bewegbare Führungsteile aufweist, wobei das Gleitelement mit einer Befestigungsseite (3) an einem der Führungsteile festlegbar ist und an einer der Befestigungsseite (3) gegenüberliegenden Seite eine Gleitfläche (6) zur gleitenden Anlage am anderen Führungsteil aufweist, wobei das Gleitelement ein erstes Teil (1) und ein zweites Teil (2) aufweist, die um eine Drehachse (D) gegeneinander drehbar gelagert sind und eine Kontaktfläche (7) zur gegenseitigen Anlage der beiden Teile (1, 2) aufweisen, wobei die Kontaktfläche (7) in einer Drehrichtung des zweiten Teils (2) gegen das erste Teil (1) um die Drehachse (D) eine axiale Steigung aufweist, so dass durch Drehung der beiden Teile (1, 2) relativ zueinander die axiale Gesamtbauhöhe der beiden an der Kontaktfläche (7) aneinander anliegenden Teile (1, 2) veränderbar ist, und die beiden Teile (1, 2) bei ihrer Relativdrehung um die Drehachse (D) entlang ihrer Kontaktfläche (7) über einen Verstellwinkel in verschiedenen Winkelpositionen aneinander arretierbar sind und die Arretierung lösbar ist, wobei an einer vom zweiten Teil (2) abgewandten Seite des ersten Teils (1) die Befestigungsseite (3) des Gleitelements zur Festlegung an einem der Führungsteile und an einer vom ersten Teil (1) abgewandten Seite des zweiten Teils (2) die Gleitfläche (6) des Gleitelements angeordnet sind, wobei das erste Teil (1) auf einem Teilkreis bezüglich der Drehachse (D) Vertiefungen (10) oder Erhöhungen aufweist, die mit einem Vorsprung (11) bzw. einer Vertiefung an einem am zweiten Teil (2) drehfest angeordneten elastischen Element (12) zur lösbaren Arretierung der beiden Teile (1, 2) in den verschiedenen Winkelpositionen durch einen formschlüssigen Eingriff zusammenwirken, das zweite Teil (2) eine Öffnung aufweist und das elastische Element (12) sich in oder unterhalb der Öffnung erstreckt und an seinem freien Ende den Vorsprung (11) bzw. die Vertiefung aufweist, **dadurch gekennzeichnet, dass** das elastische Element (12) eine Eingriffsöffnung (16) aufweist, in die ein Werkzeug (13) zur Ausübung einer axialen Druckkraft oder Zugkraft auf das elastische Element (12) zwecks Entriegelung des Formschlusses und zum Drehen des zweiten Teils (2) gegenüber dem ersten Teil (1) zwecks Lösens des Eingriffs und Drehen zwecks Verstellung der Winkelposition axial einsetzbar ist.

2. Gleitelement nach Anspruch 1, **dadurch gekennzeichnet, dass** benachbarte Winkelpositionen durch gleiche Winkel voneinander beabstandet sind.

3. Gleitelement nach Anspruch 1 oder 2, **dadurch gekennzeichnet, dass** die Kontaktfläche (7) mehrere Steigungsbereiche (8, 9) mit der axialen Steigung aufweist.

4. Gleitelement nach Anspruch 3, **dadurch gekennzeichnet, dass** die Steigungsbereiche (8, 9) über den Umkreis bezüglich der Drehachse (D) symmetrisch angeordnet sind.

5. Gleitelement nach Anspruch 3 oder 4, **dadurch gekennzeichnet, dass** zwei Steigungsbereiche (8, 9) vorgesehen sind, die sich in einer Drehrichtung um die Drehachse (D) aneinander anschließend um jeweils 180° erstrecken, und der Kontakt der beiden Teile entlang jedes Steigungsbereichs (8, 9) in jeder Winkelposition sich mindestens über 20°, vorzugsweise über mindestens 60°, erstreckt.

6. Gleitelement nach einem der Ansprüche 1 bis 5, **dadurch gekennzeichnet, dass** die Vertiefungen (10) oder Erhöhungen des ersten Teils (1) und der Vorsprung (11) bzw. die Vertiefung am elastischen Element (12) des zweiten Teils axial angeordnet sind und das elastische Element aus seinem Eingriff in eine der Vertiefungen (10) bzw. Erhöhungen auf dem Teilkreis des ersten Teils (1) durch Verbiegen in axialer Richtung lösbar ist.

7. Gleitelement nach Anspruch 6, **dadurch gekennzeichnet, dass** das elastische Element (12) bei der zum Lösen des Eingriffs erforderlichen Verbiegung nicht über die nach außen weisende Stirnseite des zweiten Teils (2) vorsteht.

8. Gleitelement nach einem der Ansprüche 1 bis 7, **dadurch gekennzeichnet, dass** das am zweiten Teil (2) angeordnete elastische Element (12) sich mit seinem freien Ende und dem daran angebrachten Vorsprung (11) bzw. der daran angebrachten Vertiefung in eine Ausnehmung (23) im Randbereich der Öffnung (14) des zweiten Teils (2) erstreckt.

9. Gleitelement nach einem der Ansprüche 1 bis 8, **dadurch gekennzeichnet, dass** die Öffnung des zweiten Teils (2) eine Durchgangsöffnung (14) ist und das erste Teil (1) eine zur Durchgangsöffnung (14) des zweiten Teils (2) fluchtende Durchgangsöffnung (15) aufweist.

10. Gleitelement nach einem der Ansprüche 1 bis 9, **dadurch gekennzeichnet, dass** das elastische Element (12) an seinem dem Vorsprung (11) bzw. der Vertiefung gegenüberliegenden Ende am Rand der Öffnung des zweiten Teils (2) befestigt ist.

11. Gleitelement nach einem der Ansprüche 1 bis 10, **dadurch gekennzeichnet, dass** das elastische Element (12) am zweiten Teil (2) einstückig angeformt ist.

12. Gleitelement nach einem der Ansprüche 1-11, **dadurch gekennzeichnet, dass** die beiden Teile (1, 2) scheibenförmig ausgebildet und durch eine zylindrische Führung an ihren äußeren Randbereichen gegeneinander drehbar gelagert sind.

13. Gleitelement nach einem der Ansprüche 1-12, **dadurch gekennzeichnet, dass** das Gleitelement durch die beiden Teile (1, 2) gebildet ist, wobei die eine nach außen weisende Seite der an ihrer Kontaktfläche (7) aneinanderliegenden Teile die Gleitfläche (6) des Gleitelements bildet und die dieser gegenüberliegende nach außen weisende Seite zur Festlegung auf einem der Führungsteile ausgelegt ist.

14. Gleitelement nach Anspruch 13, **dadurch gekennzeichnet, dass** die Gleitfläche (6) am zweiten Teil (2) und die zur Festlegung auf einen der Führungsteile ausgelegte Seite am ersten Teil (1) angeordnet ist.

15. Gleitelement nach Anspruch 14, **dadurch gekennzeichnet, dass** das zweite Teil (2) zwei federnde Laschen (24) und in deren Endbereichen jeweils einen sich nach außen erstreckenden Zapfen (25) aufweist, der jeweils in eine entsprechende Ausnehmung (26) im Führungsteil einrastbar ist.

## Claims

1. A sliding element for a guide system having two guide portions which are movable relative to each other, wherein the sliding element can be fixed with a fixing side (3) to one of the guide portions and at the side opposite the fixing side (3) has a sliding surface (6) for slidingly bearing against the other guide portion, wherein the sliding element has a first portion (1) and a second portion (2) which are mounted rotatably relative to each other about an axis of rotation (D) and have a contact surface (7) for the two portions (1, 2) to bear against each other, wherein the contact surface (7) has an axial inclination in a direction of rotation of the second portion (2) relative to the first portion (1) about the axis of rotation (D) so that by rotation of the two portions (1, 2) relative to each other the axial overall structural height of the two portions (1, 2) which bear against each other at the contact surface (7) is variable and the two portions (1, 2) upon relative rotation thereof about the axis of rotation (D) along their contact surface (7) can be arrested to each other over an adjustment angle in various angular positions and the arresting action is releasable, wherein the fixing side (1) of the sliding element for fixing to one of the guide portions is arranged at a side of the first portion (1), that faces away from the second portion (2), and the sliding surface (6) of the sliding element is arranged at a side of the second portion (2), that faces away from the first portion (1), wherein the first portion (1) on a partial circle with respect to the axis of rotation (D) has depressions (10) or raised portions which operate with a projection (11) and a recess respectively on an elastic element (12) arranged non-rotatably on the second portion (2) for releasably arresting the two portions (1, 2) in the various angular positions by a positively locking engagement, the second portion (2) has an opening and the elastic element (12) extends in or below the opening and at its free end has the projection (11) or the depression, **characterised in that** the elastic element (12) has an engagement opening (16) into which a tool (13) can be inserted axially for pushing or pulling for the purposes of releasing the engagement and rotation for the purposes of adjustment of the angular position.

2. A sliding element as set forth in claim 1 **characterised in that** adjacent angular positions are spaced from each other by equal angles.

3. A sliding element as set forth in claim 1 or claim 2 **characterised in that** the contact surface (7) has a plurality of inclination regions (8, 9) with the axial inclination.

4. A sliding element as set forth in claim 3 **characterised in that** the inclination regions (8, 9) are arranged symmetrically over the perimeter with respect to the axis of rotation (D).

5. A sliding element as set forth in claim 3 or claim 4 **characterised in that** there are provided two inclination regions (8, 9) which each extend in a direction of rotation about the axis of rotation (D) in mutually adjoining relationship through 180° and the contact of the two portions along each inclination region (8, 9) in each angular position extends at least over 20°, preferably over at least 60°.

6. A sliding element as set forth in one of claims 1 through 5 **characterised in that** the depressions (10) or raised portions of the first portion (1) and the projection (11) or the recess on the elastic element (12) of the second portion are arranged axially and the elastic element is releasable from its engagement into one of the depressions (10) or raised portions on a partial circle of the first portion (1) by bending in the axial direction.

7. A sliding element as set forth in claim 6 **characterised in that** the elastic element (12) in the bending state required for release of the engagement does not project beyond the outwardly facing end of the second portion (2).

8. A sliding element as set forth in one of claims 1 through 7 **characterised in that** the elastic element (12) arranged on the second portion (2) extends with its free end and the projection (11) provided thereon or the depression provided thereon into a recess (23) in the edge region of the opening (14) of the second portion (2).

9. A sliding element as set forth in one of claims 1 through 8 **characterised in that** the opening of the second portion (12) is a through opening (14) and the first portion (1) has a through opening (15) aligning with the through opening (14) of the second portion (2).

10. A sliding element as set forth in one of claims 1 through 9 **characterised in that** the elastic element (12) is fastened at its end opposite the projection (11) or the recess to the edge of the opening of the second portion (2).

11. A sliding element as set forth in one of claims 1 through 10 **characterised in that** the elastic element (12) is formed in one piece on the second portion (2).

12. A sliding element as set forth in one of claims 1 through 11 **characterised in that** the two portions (1, 2) are of a disk-shaped configuration and are mounted rotatably relative to each other by a cylindrical guide at their outer edge regions.

13. A sliding element as set forth in one of claims 1 through 12 **characterised in that** the sliding element is formed by the two portions (1, 2), wherein the one outwardly facing side of the portions which bear against each other at their contact surface (7) forms the sliding surface (6) of the sliding element and the outwardly facing side opposite thereto is designed for fixing on one of the guide portions.

14. A sliding element as set forth in claim 13 **characterised in that** the sliding surface (6) is arranged on the second portion (2) and the side designed for fixing on one of the guide portions is arranged on the first portion (1).

15. A sliding element as set forth in claim 14 **characterised in that** the second portion (2) has two resilient bars (24) and in the end regions thereof has a respective outwardly extending stud (25) which is respectively latchable in a corresponding recess (26) in the guide portion.

## Revendications

1. Élément de glissement pour un système de guidage, qui présente deux pièces de guidage mobiles l'une par rapport à l'autre, l'élément de glissement pouvant être fixé par un côté de fixation (3) à l'une des pièces de guidage et présentant, sur un côté opposé au côté de fixation (3), une surface de glissement (6) pour l'appui glissant sur l'autre pièce de guidage, l'élément de glissement présentant une première pièce (1) et une deuxième pièce (2), qui sont montées à rotation l'une par rapport à l'autre autour d'un axe de rotation (D) et présentent une surface de contact (7) pour l'appui mutuel des deux pièces (1, 2), la surface de contact (7) présentant une pente axiale autour de l'axe de rotation (D) dans un sens de rotation de la deuxième pièce (2) contre la première pièce (1), de sorte que, par rotation des deux pièces (1, 2) l'une par rapport à l'autre, la hauteur axiale totale des deux pièces (1, 2) en appui l'une contre l'autre sur la surface de contact (7) peut être modifiée, et les deux pièces (1, 2) peuvent être verrouillées l'une contre l'autre lors de leur rotation relative autour de l'axe de rotation (D) le long de leur surface de contact (7) sur un angle de réglage dans différentes positions angulaires et le verrouillage peut être libéré, le côté de fixation (3) de l'élément de glissement pour la fixation sur l'une des pièces de guidage étant disposé sur un côté de la première pièce (1) détourné de la deuxième pièce (2) et la surface de glissement (6) de l'élément de glissement étant disposée sur un côté de la deuxième pièce (2) détourné de la première pièce (1), la première pièce (1) présentant, sur un cercle primitif par rapport à l'axe de rotation (D), des creux (10) ou des bosses qui coopèrent avec une saillie (11) respectivement un creux sur un élément élastique (12) disposé de manière solidaire en rotation sur la deuxième pièce (2) pour verrouiller de manière amovible les deux pièces (1, 2) dans les différentes positions angulaires par un engagement par complémentarité de formes, la deuxième pièce (2) présentant une ouverture et l'élément élastique (12) s'étendant dans ou sous l'ouverture et comportant à son extrémité libre la saillie (11) respectivement le creux, **caractérisé en ce que** l'élément élastique (12) présente une ouverture d'engagement (16) dans laquelle un outil (13) peut être inséré axialement pour exercer une force de compression axiale ou une force de traction sur l'élément élastique (12) afin de déverrouiller l'engagement positif et pour faire tourner la deuxième pièce (2) par rapport à la première pièce (1) pour les déverrouiller et pour faire tourner afin de régler la position angulaire.

2. Élément de glissement selon la revendication 1, **caractérisé en ce que** des positions angulaires voisines sont espacées les unes des autres par des angles identiques.

3. Élément de glissement selon la revendication 1 ou 2, **caractérisé en ce que** la surface de contact (7) présente plusieurs zones de pente (8, 9) avec la pente axiale.

4. Élément de glissement selon la revendication 3, **caractérisé en ce que** les zones de pente (8, 9) sont disposées symétriquement sur la circonférence par rapport à l'axe de rotation (D).

5. Élément de glissement selon la revendication 3 ou 4, **caractérisé en ce que** deux zones de pente (8, 9) sont prévues, qui s'étendent dans un sens de rotation autour de l'axe de rotation (D) l'une à la suite de l'autre de respectivement 180°, et le contact des deux pièces le long de chaque zone de pente (8, 9) s'étend dans chaque position angulaire sur au moins 20°, de préférence sur au moins 60°.

6. Élément de glissement selon l'une quelconque des revendications 1 à 5, **caractérisé en ce que** les creux (10) respectivement les bosses de la première pièce (1) et la saillie (11) respectivement le creux sont disposés axialement sur l'élément élastique (12) de la deuxième pièce et l'élément élastique peut être libéré de son engagement dans l'un des creux (10) ou des bosses sur le cercle primitif de la première pièce (1) par une flexion dans la direction axiale.

7. Élément de glissement selon la revendication 6, **caractérisé en ce que** l'élément élastique (12) ne fait pas saillie au-delà de la face frontale de la deuxième pièce (2) orientée vers l'extérieur lors de la flexion nécessaire pour libérer l'engagement.

8. Élément de glissement selon l'une quelconque des revendications 1 à 7, **caractérisé en ce que** l'élément élastique (12) disposé sur la deuxième pièce (2) s'étend avec son extrémité libre et la saillie (11) qui y est fixée respectivement le creux qui y est prévu dans un évidement (23) dans la zone de bordure de l'ouverture (14) de la deuxième pièce (2).

9. Élément de glissement selon l'une quelconque des revendications 1 à 8, **caractérisé en ce que** l'ouverture de la deuxième pièce (2) est une ouverture de passage (14) et la première pièce (1) présente une ouverture de passage (15) alignée avec l'ouverture de passage (14) de la deuxième pièce (2).

10. Élément de glissement selon l'une quelconque des revendications 1 à 9, **caractérisé en ce que** l'élément élastique (12) est fixé au bord de l'ouverture de la deuxième pièce (2) à son extrémité opposée à la saillie (11) respectivement au creux.

11. Élément de glissement selon l'une quelconque des revendications 1 à 10, **caractérisé en ce que** l'élément élastique (12) est formé d'un seul tenant sur la deuxième partie (2).

12. Elément de glissement selon l'une quelconque des revendications 1 à 11, **caractérisé en ce que** les deux pièces (1, 2) sont réalisées en forme de disque et sont montées rotatives l'une contre l'autre par un guidage cylindrique sur leurs zones de bord extérieures.

13. Élément de glissement selon l'une quelconque des revendications 1 à 12, **caractérisé en ce que** l'élément de glissement est formé par les deux pièces (1, 2), l'une des faces tournées vers l'extérieur des pièces en contact l'une avec l'autre au niveau de leur surface de contact (7) formant la surface de glissement (6) de l'élément de glissement et la face tournée vers l'extérieur opposée à cette face étant conçue pour être fixée sur l'une des pièces de guidage.

14. Élément de glissement selon la revendication 13, **caractérisé en ce que** la surface de glissement (6) est disposée sur la deuxième pièce (2) et le côté conçu pour être fixé sur l'une des pièces de guidage est disposé sur la première pièce (1).

15. Élément de glissement selon la revendication 14, **caractérisé en ce que** la deuxième pièce (2) présente deux pattes élastiques (24) et, dans leurs zones d'extrémité, respectivement un tenon (25) s'étendant vers l'extérieur, qui peut être encliqueté respectivement dans un évidement correspondant (26) dans la pièce de guidage.
